(19) Europäisches Patentamt European Patent Office Office européen des brevets

(11) EP 2 858 513 B1

(12) EUROPEAN PATENT SPECIFICATION

(45) Date of publication and mention of the grant of the patent:
23.11.2016 Bulletin 2016/47

(51) Int Cl.:
A23D 7/01 (2006.01)   A23D 9/013 (2006.01)
A23K 20/00 (2016.01)   A23K 50/75 (2016.01)

(21) Application number: 13730750.0

(22) Date of filing: 06.06.2013

(86) International application number:
PCT/US2013/044450

(87) International publication number:
WO 2013/184879 (12.12.2013 Gazette 2013/50)

(54) **PUMPABLE FAT COMPOSITIONS, USE IN FEED AND METHOD FOR REDUCING THEIR VISCOSITY.**

PUMPFÄHIGE FETTZUSAMMENSETZUNG, VERWENDUNG IN FUTTER UND VERFAHREN ZUR REDUZIEREN DEREN VISKOSITÄT.

COMPOSITIONS POMPABLES À BASE DE MATIÈRES GRASSES , UTILISATION DANS LES ALIMENTS POUR ANIMAUX ET MÉTHODE POUR RÉDUITRE LEUR VISCOSITÉ.

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 07.06.2012 EP 12004343

(43) Date of publication of application:
15.04.2015 Bulletin 2015/16

(73) Proprietor: Cargill, Incorporated
Wayzata, MN 55391 (US)

(72) Inventors:
• HOLLANDER, Frank
4051 BL Ochten (NL)
• LOBEE, Henricus, Wilhelmus, Jozef
5305 CD Zuilichem (NL)
• POS, Jeroen
3511 HC Utrecht (NL)

(74) Representative: Elseviers, Myriam
Cargill R&D Centre Europe BVBA
Bedrijvenlaan 9
2800 Mechelen (BE)

(56) References cited:
WO-A1-99/42001     WO-A1-02/094221
US-A- 5 952 314     US-A1- 2005 186 230
US-A1- 2007 207 173     US-A1- 2007 219 270
US-A1- 2007 249 520     US-B1- 6 197 356

• DATABASE WPI Week 201034 Thomson Scientific, London, GB; AN 2010-C31600 XP002716134, & CN 101 642 201 A (SHENZHEN YUNHONG SCI & TECHN CO LTD) 10 February 2010 (2010-02-10)

## Description

TECHNICAL FIELD

The present invention relates to pumpable fat compositions. In particular, it relates to pumpable fat compositions which can be used to prevent the growth of microbial agents in animals and to methods of producing such compositions.
The aspects of the invention are illustrated in claims 1 to 15.

BACKGROUND OF THE INVENTION

Medium-chain fatty acids (MCFAs), i.e. fatty acids with a carbon chain length from 6-12 carbon atoms, are considered to be a unique category of fat substances. Unlike long-chain fatty acids, MCFAs can be absorbed directly into the bloodstream without re-esterification or inclusion in chylomicrons. As such, MCFAs can be transported rapidly to organs requiring energy. What's more, MCFAs are preferentially oxidized in the mitochondria, making them an excellent source of fast energy.
Certain MCFAs have also been found to have a beneficial antimicrobial effect. This is considered a key attribute in the field of animal husbandry where controlling levels of micro-organisms in the animals' digestive tract is a priority. Animals may be exposed to bacteria, yeast and fungi through the rearing environment and feed products. These micro-organisms can cause significant disruption to the animals' digestive system and an imbalance in the microbial ecosystem of their gastrointestinal tract. This can result in less efficient digestion and nutrient absorption which, in turn, will affect growth rates. It could also lead, in some cases, to disease and, potentially, to the loss of the animal. In any event, it is clear that being able to control microbial populations has a significant effect on profitability. This used to be achieved through the application of low-dose antibiotics. However, the addition of such growth promoters to feed products was banned, in the EU, in 2006. Interest in natural alternatives - such as MCFAs - has therefore increased.
MCFAs are now regularly added to feed compositions along with one or more other ingredients intended to benefit the animal or promote growth. Of course, the more ingredients that need to be mixed, the greater the effort for the feed manufacturer or end user. What's more, certain ingredients are not easy to handle. Lecithin, for example, which is used as an energy source in feed compositions, is nearly solid at room temperature and, as such, is difficult to pump and to mix with other feed ingredients. The present invention seeks to addresses some of these concerns.

STATEMENTS OF THE INVENTION

According to a first aspect of the present invention, there is provided a pumpable fat composition comprising: an MCFA-rich composition; and lecithin, in a weight ratio of 20:80 to 80:20.
According to another aspect of the present invention, there is provided a feed composition comprising the above pumpable fat composition.
According to yet another aspect of the present invention, there is provided a pumpable fat composition as defined above for use in inhibiting the growth of microbial agents in animals.
According to another aspect of the present invention, there is provided a pumpable fat composition as defined above for use in enhancing feed efficiency and/or enhancing growth and/or reducing mortality in an animal.
According to a further aspect of the present invention, there is provided the use of the above pumpable fat composition as an energy source for animals.
According to an additional aspect of the present invention, there is provided a method of reducing the viscosity and/or increasing the pumpability of lecithin comprising mixing it with an MCFA-rich composition in a weight ratio of 20:80 to 80:20; or a method of reducing the viscosity and/or increasing the pumpability of an MCFA-rich composition comprising mixing said composition with lecithin in a weight ratio of 20:80 to 80:20.

DESCRIPTION OF INVENTION

The present invention provides a method of producing pumpable fat compositions. The term "pumpable", as used herein, refers to the fact that the composition can be pumped at room temperature (all other conditions being normal), i.e. that the fat is fluid enough at room temperature (i.e. at about 20°C) to be readily dispensed from a storage unit and, according to certain embodiments, mixed with additional ingredients to produce, for example, a complete feed composition.
Advantageously, the term "pumpable" will be understood as referring to the fact that the composition of the present invention will have a fluidity at 20°C, measured according to Method B, of at least 0.5 cm over 30 seconds, more preferably of at least 2 cm, more preferably of at least 5 cm. The composition will advantageously have a solid fat content at 20°C, measured according to Method A, of less than 30% by weight, more preferably of less than 25% by weight, more preferably of less than 20% by weight.

The term "fat composition" as used herein refers to any composition of glycerides, particularly triglycerides, free fatty acids and other lipids. It may of course also contain, in small quantities, other non-fatty components - although it will preferably contain no more than 1% moisture by weight. In particular, the fat composition of the present invention will comprise an MCFA-rich composition and lecithin (the mixture of these two components being referred to herein simply as the "MCFA/lecithin mixture"). Preferably, it will comprise at least 80% by weight, more preferably at least 90% by weight of the MCFA/lecithin mixture. According to one particular embodiment, the composition will consist essentially of the MCFA/lecithin mixture.

The term "MCFA" as used herein will be understood, in the context of the present invention, as referring to fatty acids with a carbon chain length from 6-12 carbon atoms (i.e. caproic acid (C6), caprylic acid (C8), capric acid (C10) and lauric acid (C12)), as well as to salts, derivatives, emulsions and mixtures thereof. The MCFA-rich composition may be from any available source. Preferably, it will be a split lauric oil, a split acid oil, a lauric oil fatty acid distillate (FAD) or a mixture of two or more thereof.

Lauric oils will generally be understood to be oils rich in MCFAs, as defined above. Examples of such oils include coconut oil, palm kernel oil, babassu oil, cohune oil, tacum oil and cuphea oil. For the purposes of the present invention, the lauric oil will preferably be selected from coconut oil and palm kernel oil, or mixtures thereof.

Acid oils are FFA-rich compositions obtained by saponification and then protonation of an oil. They may be derived from oils such as rapeseed oil, sunflower oil, soybean oil or palm oil. Preferably, the acid oils will be derived from lauric oils.

The lauric and acid oils may be split or provided in the form of FADs. FADs are free fatty acid (FFA)-rich compositions obtained as a by-product of physical oil refining. Splitting is a process for separating fatty acids from their glycerol backbone to produce FFAs. There are at least four known methods of fat splitting: the Twitchell process (although somewhat archaic now), the batch autoclave process, the continuous countercurrent process (also known as the Colgate-Emery process), and the enzymatic process (using lipase enzymes such as those from Candida Rugosa, Aspergillus niger or Rhizopus arrhizus). Preferably, splitting will be achieved through chemical hydrolysis under high pressure and at high temperatures. The obtained FFA-rich compositions may then be purified and separated into fractions by distillation and fractionation.

According to one aspect, the lauric oil is split according to the method described in PCT/IB2013/000629. Preferably, the split lauric oil is obtained by first treating a lauric oil, preferably coconut oil, with activated carbon and then splitting it.

The MCFA-rich compositions used according to the present invention will comprise 90% or more, by weight, FFAs. FFA content is measured using the standard method AOCS Ca 5a-40 (97). Preferably, the composition will comprise 95% or more, more preferably 97% or more, more preferably 99% or more FFA by weight. The FFAs will have a high MCFA content. Preferably, they will comprise more than 50% MCFAs. More preferably, they will comprise 60% or more, 70% or more, or 80% or more MCFAs. According to one possible embodiment, the MCFA-rich composition of the present invention will comprise, by weight:

- 0-5%, preferably 0-1%, C6 fatty acids;
- 1-15%, preferably 2-10%, C8 fatty acids;
- 1-15%, preferably 1-8%, C10 fatty acids; and
- 35-70%, preferably 40-55%, C12 fatty acids.

The term "lecithin", as used herein, will generally refer to any of a group of complex, naturally occurring mixtures of phospholipids and other polar lipids. It may also refer to modified lecithins (e.g. bleached or de-oiled lecithins), fractionated lecithins (including lecithin fractions enriched in phospholipids such as phosphatidyl glycerol or phosphatidic acid - so-called "enriched lecithin fractions") or synthetic lecithin alternatives. They may comprise glycerols, fatty acids, phosphoric acids, amino alcohols, carbohydrates and the like. Preferably, the lecithin will be a plant-derived lecithin such as soybean, rapeseed or sunflower lecithin. More preferably, it will be rapeseed or sunflower lecithin.

Lecithin is typically very viscous and difficult to handle at room temperature. It is not pumpable below 50°C. By comparison, an MCFA-rich composition would typically be pumpable at 25°C. Surprisingly, it has been found that, when lecithin and MCFA-rich compositions are mixed, the fat composition becomes much less viscous and therefore more manageable. In fact, the mix becomes pumpable at temperatures as low as 20°C (i.e. even lower than the MCFA-rich compositions on their own). To achieve this entirely unexpected effect, the MCFA-rich composition and lecithin should be mixed in a weight ratio of 20:80 to 80:20, preferably of 20:80 to 60:40, more preferably of 30:70 to 50:50. According to one possible embodiment, they will be mixed in a weight ratio of about 40:60.

As such, the present invention also provides a method of reducing the viscosity and/or increasing the pumpability of a MCFA-rich composition by mixing it with lecithin in a weight ratio of 20:80-80:20, preferably of 20:80 to 60:40, more preferably of 30:70 to 50:50, according to one possible embodiment in a weight ratio of about 40:60; and a method of reducing the viscositity and/or increasing the pumpability of lecithin by mixing it with a MCFA-rich composition in a weight ratio of 20:80-80:20, preferably of 20:80 to 60:40, more preferably of 30:70 to 50:50, according to one possible embodiment, in a weight ratio of about 40:60.

Advantageously, the obtained pumpable fat compositions can be used both as an energy source and as an antimicrobial composition. The term "antimicrobial" as used herein refers to substances that are capable of killing or inhibiting the growth of microorganisms such as bacteria and fungi (including yeasts). In particular, it may refer to substances that are capable of killing or inhibiting the growth of fungi such as Aspergillus, Candida, Cephalosporum, Fusarium, and Penicillium; yeasts such as Saccharomyces; Gram-negative bacteria such as Escherichia coli, Salmonella, and Shigella; and Gram-positive bacteria such as Listeria.

Thus, the present invention further relates to the pumpable fat compositions as described above for use as antimicrobial agents and/or the present invention relates to the use of the pumpable fat compositions as described above as an energy source for animal feed and, in fact, animal feeds comprising such compositions are also part of the present invention.

The term "animal feed" as used herein, includes all solid or semi-solid feeds as well as liquid feeds and premixes. The animal feed will be admixed with the composition of the present invention to form an animal feed which, when administered, will provide an effective amount of the composition to the animal.

According to one particular embodiment, the present invention relates to feeds (or feed compositions) comprising the above fat compositions in an amount of 0.05 to 10%, preferably in an amount of 0.2 to 5%, even more preferably in an amount of 0.3 to 2%, for example in an amount of 0.5 to 1%, expressed as the amount of MCFA by weight in the total feed composition.

In addition to the antimicrobial composition, the animal feeds of the present invention may further comprise one or more other active ingredients. These may include any material which can be added to the feed to enhance the animal's health, performance, and/or well-being. Examples of such ingredients are referred to in "2006 Feed Additive Compendium" and "handbook of Feed Additives 2006".

Feed compositions of the present invention may be used, for instance, for equine animals (such as horses), ovine animals (such as lamb and sheep) and bovine animals (such as cattle), but will be particularly suitable for calves (e.g. veal calves), porcine animals (such as pigs and piglets), rabbits, poultry (such as chickens, turkeys, ducks, pheasant and quail), domestic animals (such as cats and dogs), and aquatic animals (such as fish and shrimp).

The antimicrobial compositions of the present invention, and animal feeds comprising them, may be used to enhance feed efficiency and/or enhance growth and/or reduce mortality in animals. Thus, the present invention further provides a composition according to the present invention for use in enhancing feed efficiency and/or enhancing growth and/or reducing mortality in an animal.

Feed efficiency is a term generally known in the art and refers to a ratio of weight of food ingested/weight gain of an animal. Enhancement of feed efficiency is an overall decrease in the ratio over that which would otherwise occur without implementation of the methods and/or administration of the compositions of the present invention.

Growth and enhancing growth are terms generally known in the art and refer to increases in either, or both, weight and size (e.g., height, width, diameter, circumference, etc.) over that which would otherwise occur without implementation of the methods and/or administration of the compositions of the present invention. Preferably growth and growth enhancement refer to increase in either or both weight and size as defined above compared to increase in growth that is measured when the animal is fed with a diet otherwise identical to a diet comprising the composition of the present invention, except that the composition of the invention is entirely replaced by soya oil. Growth can refer to an increase in the mass (e.g., weight or size) of the entire animal or of a particular tissue (e.g., muscle tissue in general or a specific muscle). Alternatively, growth can indicate a relative increase in the mass of one tissue in relation to another, in particular, an increase in muscle tissue relative to other tissues (e.g., adipose tissue). Advantageously, the pumpable fat composition of the present invention acts not only as an antimicrobial composition but also as a non-negligible energy source. In fact, it has surprisingly been found that the MCFA/lecithin mixes of the present invention may contribute more calories than the sum of calories contributed by the MCFA-rich composition and lecithin separately. In particular feeding the animal a diet with the MCFA/lecithin mixes of the present invention may result in more calories ingested by the animal than the sum of calories ingested from a diet with MCFA-rich composition and a diet with lecithin separately.

Reducing mortality refers to increasing the survivability or decreasing the death rate in animals after birth or hatch as compared with that which would otherwise occur in the absence of implementation of the methods and/or administration of the compositions of the present invention.

Effective amount refers to the amounts of administration of the fat composition, to provide enhanced growth, enhanced feed efficiency, and/or reduced mortality. Further, such amount and rates should result in no or few adverse events in the treated animal. As those familiar with the art will understand, the amounts and rates will vary depending upon a number of factors. These factors include, for example, the type of animal being treated, its weight and general physical condition, and the dosing regimen. Ranges for the rate of administration of the fat composition are from about 1 to about 3000, desirably 10 to 1000, and more desirably from about 10 to about 500 mg/kg of weight of the animal.

These amounts are to be administered normally every day for at least 7 days, at least 2 weeks, at least 30 days, over 60 days, over 100 days, or for all or a substantial portion of the life of the animal.

Further permutations and embodiments of the present invention will be apparent to a person skilled in the art and are incorporated herein without further description.

METHODOLOGY

Method A - Determination of Solid Fat Content (based on AOCS method Cd16b-93)

The MCFA-rich composition and lecithin were mixed at 80°C and placed in a glass NMR tube. The mixture is kept at 80°C for 10 minutes, then cooled to 0°C for 60 min, and finally placed at 20°C for 30 min. The tube is then closed with a red cap and the solid fat content is measured by NMR.

Method B - Determination of Fluidity

A capped tube, prepared as above (Method A), is placed at a 10° angle (relative to horizontal). Fluidity of the mixture was determined at 20°C by measuring the movement of the front (i.e. the distance travelled in the tube by the mixture, in cm) after 30 seconds.

EXAMPLES

Example 1

A number of samples were prepared by mixing coconut fatty acid distillate (CFAD) and lecithin together in different ratios. Their solid fat content and fluidity were then measured according to Methods A and B above. The results are shown in Table 1, below.

| Table 1 | | | | |
|---|---|---|---|---|
| Sample no. | CFAD (%) | Lecithin (%) | SFC 20°C | Fluidity 20°C |
| 1 | 0 | 100 | 34.06 | 0 cm 30 sec |
| 2 | 10 | 90 | 24.66 | 0.5 cm 30 sec |
| 3 | 20 | 80 | 17.10 | 2.5 cm 42 sec |
| 4 | 30 | 70 | 11.56 | 4.0 cm 30 sec |
| 5 | 40 | 60 | 8.08 | 10 cm 30 sec |
| 6 | 50 | 50 | 8.21 | 1 cm 30 sec |
| 7 | 60 | 40 | 13.46 | 0 cm 30 sec |
| 8 | 70 | 30 | 18.53 | 0 cm 30 sec |
| 9 | 100 | 0 | 30.44 | 0 cm 30 sec |

As can be seen from these results, the compositions of the present invention have both increased fluidity (= reduced viscosity) and a lower SFC at room temperature than either lecithin or CFAD when taken alone.

Example 2 - Effects of oil source on production performance and digestibility

*Experimental Design*

A trial to evaluate the effect of different oil sources (soya oil, split coconut oil (CNO-split), lecithin (standard rapeseed lecithin) and a combination CNO-split/lecithin (20% by weight of the combination is CNO-split and 80 % by weight of the combination is lecithin)) was performed over a period of just over a month, split into two phases: Phase 1 (0-14 days), the starter phase, and Phase 2 (14-35 days), the grower phase. At 14 days all birds were switched to a grower diet until 34 days of age. Feed and water were provided ad libitum. Split coconut oil is obtained according to example 1 of PCT/IB2013/000629:

A crude coconut oil from the Philippines, with 3% free fatty acids (FFA), is physically refined. The physical refining process consists of an acid degumming step (citric acid), a bleaching step (with 1.5% acid activated bleaching earth and 2.5 kg/MT Norit SA Ultra activated carbon), and, finally, a deodorization step (240C, 1% steam, 3 mbar). All conditions and filter aid used are according to industrial standards. The refined oil has a FFA level of < 0.1% and a Lovibond red of < 2.

The activated carbon treated oil is then hydrolysed using the Colgate-Emery process to obtain 98% free fatty acid purity, measured according to AOCS method Ca 5a-40 (lauric acid). The conditions of the Colgate-Emery process are according to industrial standards.

*Birds and Housing*

A total of 420 male Ross 308 day-old male chicks, derived from 57 week old broiler breeders, were purchased from a commercial hatchery. On arrival, the birds were randomly assigned to cages, with 17 birds per cage. After placement of the chicks, the total weight of all birds per cage was recorded to determine start weight of the chicks. The cages were evenly divided between two rooms (A and B). The cages in room A had average starting weights of 47.9 (+/- 1.1) g/chick. The cages in room B has average starting weights of 44.5 (+/+ 1.3) g/chick.

Throughout the trial, birds were housed in individual broiler grower cages (100 x 110 cm) on litter (wood shavings). Each cage was equipped with two drinking cups with adjustable height. For the first 14 days, the feeder was inside the cage, and thereafter the feed was supplied via a feeder through the front of the cage.

Day length was set for 23 hours a day during the first 3 days, 20 hours a day from day 4 until day 7, and 18 hours a day during the remainder of the trial. Temperature, humidity and ventilation were computer controlled. Temperature was gradually decreased 2.5°C per week, from 35°C on the day of arrival to a final temperature of 20.5°C at the end of the experiment (day 35). Relative humidity was set at 50%. The birds were spray-vaccinated against Newcastle Disease (Poulvac NDW-vaccine, Internet, Boxmeer, NL) at 10 days of age.

*Experimental Diets*

In advance of diet formulation, batches of wheat, corn and soybean meal (SBM) were reserved and wet chemically analyzed for crude protein. Additionally, SBM was analyzed for dry matter and K. Near Infrared Spectroscopy (NIRS) was used to predict crude ash, crude fat, crude fiber and moisture. SBM was also analyzed for amino acid content.

Formulation of diets was based on the analyzed nutrient content of the reserved raw materials. A basal diet was formulated, with soya oil as the only fat source. The other fat sources (CNO-split, lecithin and combination CNO-split/lecithin) were added on a weight to weight basis, fully replacing the soya oil. The composition of the experimental diets is given in the following tables.

Table 1 - Ingredients

| Ingredients, % | Starter diet | Grower diet |
|---|---|---|
| Corn BG1205 | 41.9 | 45.0 |
| Wheat BG1205 | 15.0 | 15.0 |
| Soybean meal >48% BG1205 | 33.7 | 30.6 |
| Fats/oils, Soya oil | 4.51 | 4.64 |
| Limestone | 1.7 | 1.4 |
| Monocalciumphosphate | 1.32 | 1.11 |
| Broiler premix 1 % | 1.00 | 1.00 |
| Sodiumbicarbonate | 0.30 | 0.23 |
| Salt | 0.178 | 0.174 |
| L-Lysine HCl | 0.162 | 0.171 |
| DL-Methionine | 0.197 | 0.179 |
| L-Threonine | 0.010 | 0.011 |
| **Total** | **100.0** | **100.0** |

Table 2 - Nutrients

| Nutrients, % | Starter diet | Grower diet |
|---|---|---|
| Crude protein | 21.5 | 20.4 |
| OIL (EE) | 7.1 | 7.3 |
| Crude fibre | 2.5 | 2.4 |
| Ash | 6.2 | 5.5 |
| DM | 88.7 | 88.6 |
| Calcium | 0.97 | 0.80 |
| Phosphor, total | 0.68 | 0.62 |
| Na | 0.16 | 0.14 |
| K | 0.88 | 0.83 |
| Cl | 0.18 | 0.18 |
| Dig.P broilers | 0.40 | 0.35 |
| aP broilers | 0.43 | 0.38 |
| dEB, meq | 243 | 223 |
| AME poultry, kcal | 3053 | 3120 |
| AME poultry (FS-R), kcal | 3068 | 3134 |
| AME broiler, kcal | 2850 | 2925 |
| LYS | 1.22 | 1.16 |
| MET | 0.52 | 0.49 |

Table 3a - Analysis Starter diets

| | Starter diets | | | |
|---|---|---|---|---|
| | Control | Lecithin | CNO-split | CNO-split/ lecithin |
| *Calculated nutrients*, % | | | | |
| Crude protein | 21.5 | 21.5 | 21.5 | 21.5 |
| Crude fat | 7.1 | 7.1 | 7.1 | 7.1 |
| Crude fibre | 2.5 | 2.5 | 2.5 | 2.5 |
| Dry matter | 88.7 | 88.7 | 88.7 | 88.7 |
| Ca | 0.97 | 0.97 | 0.97 | 0.97 |
| P | 0.68 | 0.68 | 0.68 | 0.68 |
| *Analysed nutrients* | | | | |
| Crude protein | 22.3 | 22.3 | 22.5 | 22.7 |
| Crude protein (NIRS) | 22.5 | 21.7 | 22.9 | 22.4 |
| Crude fat (Soxhlet extraction) | 7.0 | 6.6 | 6.2 | 6.4 |
| Crude fat (NIRS) | 7.0 | 5.8 | 6.8 | 6.1 |
| Crude fibre (NIRS) | 2.3 | 2.6 | 1.9 | 2.5 |
| Moisture (NIRS) | 10.6 | 11.2 | 10.7 | 10.5 |
| Dry matter | 89.4 | 88.8 | 89.3 | 89.5 |

(continued)

| Analysed nutrients | | | | |
|---|---|---|---|---|
| Ca | 0.98 | 0.99 | 0.99 | 1.03 |
| P | 0.65 | 0.75 | 0.65 | 0.75 |
| % of expected | | | | |
| Crude protein | 104 | 104 | 105 | 105 |
| Crude fat | 99 | 93 | 88 | 91 |
| Crude fibre | 91 | 102 | 75 | 98 |
| Dry matter | 101 | 100 | 101 | 101 |
| Ca | 101 | 102 | 102 | 106 |
| P | 96 | 110 | 96 | 110 |

Table 3b - Analysis Grower Diets

| | Grower diets | | | |
|---|---|---|---|---|
| | Control | Lecithin | CNO-split | CNO-split/ lecithin |
| Calculated nutrients, % | | | | |
| Crude protein | 20.4 | 20.4 | 20.4 | 20.4 |
| Crude fat | 7.3 | 7.3 | 7.3 | 7.3 |
| Crude fibre | 2.4 | 2.4 | 2.4 | 2.4 |
| Dry matter | 88.6 | 88.6 | 88.6 | 88.6 |
| Ca | 0.80 | 0.80 | 0.80 | 0.80 |
| P | 0.62 | 0.62 | 0.62 | 0.62 |
| Analysed nutrients | | | | |
| Crude protein | 21.1 | 21.5 | 21.0 | 21.2 |
| Crude protein (NIRS) | 21.2 | 21.4 | 21.4 | 21.1 |
| Crude fat (Soxhlet extraction) | 7.2 | 7.0 | 4.8 | 6.4 |
| Crude fat (NIRS) | 7.2 | 6.0 | 7.0 | 6.0 |
| Crude fibre (NIRS) | 2.4 | 2.6 | 1.9 | 2.4 |
| Moisture (NIRS) | 11.2 | 10.2 | 10.7 | 10.5 |
| Dry matter | 88.8 | 89.8 | 89.3 | 89.5 |
| Ca | 0.81 | 0.88 | 0.84 | 0.86 |
| P | 0.59 | 0.70 | 0.60 | 0.67 |
| % of expected | | | | |
| Crude protein | 103 | 105 | 103 | 104 |
| Crude fat | 98 | 95 | 65 | 87 |
| Crude fibre | 99 | 107 | 78 | 99 |
| Dry matter | 100 | 101 | 101 | 101 |
| Ca | 102 | 110 | 105 | 108 |
| P | 95 | 112 | 96 | 108 |

The diets were produced by Research Diet Services, the Netherlands. First a batch of basal diet without soya oil was produced. Then, to each batch the fat source (soya oil, CNO-split, lecithin and combination CNO-split/lecithin) was added. Starter diets were pelleted at 2.5 mm and grower diets at 3 mm with steam addition (app. 80°C).

*Data collection*

Bird weights were recorded per cage at the start of the experiment (day 0) and individually at 7, 14, 21, 28 and 35 days of age. In addition, feed consumption for each cage was recorded on the same day the birds were weighed. Based on calculated body weight gain and feed consumption, feed to gain ratio (F:G) was calculated as kg of feed consumed / kg of weight gain. It is desirable to have a low F:G ratio. Total feed consumption per cage was corrected for morality, culling and outliers (table 5). Finally, the European Poultry Index (EPI - De Herdt et all., 1999) was calculated using the following formula:

$$EPI = (final\ body\ weight\ (g) \times (100\% - mortality\%)) / ((10 \times period\ in\ days) \times overall\ FCR),$$

where FCR = Feed Conversion Ratio.
The EPI excluding mortality was calculated using the following formula:

$$EPI = (final\ body\ weight\ (g) \times 100) / ((10 \times period\ in\ days) \times overall\ FCR)$$

The results are set out in the following table.

Table 4 - Body Weight and Feed Consumption

|  | Soya oil | Lecithin | CNO-split | CNO-split / lecithin |
|---|---|---|---|---|
| Body Weight (BW) at 0 days, in g | 46 | 47 | 46 | 46 |
| BW 14d, g | 553 | 545 | 543 | 559 |
| BW 34d, g | 2353 | 2333 | 2441 | 2427 |
| Average Daily Gain (ADG) from 0-7 days, in g | 20.5 | 207 | 20.7 | 21.4 |
| ADG 0-14d, g | 36.2 | 35.6 | 35.5 | 36.7 |
| ADG 0-34d, g | 67.8 | 67.2 | 70.5 | 70.0 |
| ADG 14-34d, g | 90.0 | 89.4 | 94.9 | 93.4 |
| Average Daily Feed Intake (ADFI) from 0-7 days, in g | 19.7 | 20.2 | 19.5 | 20.8 |
| ADFI 0-14d, g | 39.7 | 39.8 | 39.1 | 40.5 |
| ADFI 0-34d, g | 97.5 | 98.4 | 98.7 | 100.1 |
| ADFI 14-34d, g | 138 | 139 | 140 | 142 |
| Feed to Gain ratio (F:G) from 0-7 days, in g | 0.958 | 0.977 | 0.939 | 0.974 |
| F:G 0-14d, g | 1.097 | 1.118 | 1.102 | 1.106 |
| F:G 0-34d, g | 1.438 | 1.463 | 1.401 | 1.429 |
| F:G 14-34d, g | 1.534 | 1.559 | 1.479 | 1.518 |
| F:G corrected for final BW | 1.432 | 1.463 | 1.369 | 1.401 |
| European Performance Index (EPI) | 458 | 451 | 493 | 450 |
| EPI, excluding mortality | 481 | 469 | 513 | 499 |

Table 5 - Mortality, culling and Outliers

| Period | Mortality | Culling | Outliers* | Total** |
|---|---|---|---|---|
| d 0-14 | 2.0 | 0.2 | 2.2 | 4.4 |
| d 14-34 | 0.2 | 3.2 | 2.0 | 5.4 |
| d 0-34 | 2.2 | 3.4 | 4.2 | 9.8 |
| * birds with lower weights than the [(average cage weight) - (2.5 x cage SD)] and female birds (d 34); ** calculated as a percentage of birds on d 0. | | | | |

At day 35 of the experiment, all birds of each cage were successively weighted and killed by $CO_2/O_2$. Subsequently, the intestinal tract was removed and the content of the 2nd half of the ileum (middle of ileum to the ileal-cecal-colon junction) was collected by gently squeezing using fingers. Samples were held on ice, frozen (-18°C) and, afterwards, freeze-dried, ground (0.5 mm screen) and stored for analysis.

All samples were analyzed for crude fat (AOCS Am 5-04), gross energy (bomb calorimetry) and acid insoluble ash (Schothorst Feed Research, the Netherlands) to determine digestibility.

*Results*

Nutritional composition of the diets was in line with the expected values, except crude fat levels of the CNO-split and the combination CNO-split/lecithin starter diet which were lower than expected. This may be due to the MCFA content of the CNO-split for which a regular crude fat analysis is not suitable as heating of the sample during preparation may result in evaporation of the MCFA. During pelleting, heat is also used and this may also cause some evaporation.

Observed health status of the birds was good throughout the experiment. Mortality, including culling, reached 5.6%. No statistical differences in mortality were found between the different diets (i.e. between diets with soya oil, lecithin, CNO-split, combination CNO-split/lecithin).

Technical performance (mean body weight at d 34: 2,389 g) was in line with other trials carried out at the same facilities (mean body weight for 2011: 2,444 g).

During the starter period (0-14d), there was no effect of fat source on average daily gain (ADG) or average daily feed intake (ADFI). However, F:G was affected by the fat source in the diet. From 0 to 7 days, lecithin numerically worsened F:G with 2.0% and the combination CNO-split/lecithin worsened F:G with 1.7% compared to soya oil. CNO-split numerically improved F:G by 2.0% compared to soya oil. This may be related to the poor fat digestion of young birds, with MCFA being a more easily digested energy source. This effect disappears when evaluating the entire starter period (0-14d). Lecithin significantly worsened F:G with 1.9% compared to soya oil, indicating that the energy value of lecithin is lower than the energy of soya oil.

In the grower period (14-34d) ADG was similar for birds fed soya oil and lecithin, whereas ADG was significantly higher for birds fed CNO-split (+5.5%) or the combination CNO-split/lecithin (+3.8%). Additionally, CNO-split significantly improved F:G (by 3.6%) compared to soya oil, the combination CNO-split/lecithin also improved F:G (by 1%) compared to soya oil whereas lecithin numerically worsened F:G (by 1.6%) compared to soya oil. During the entire period (0-34d), similar trends as for the grower period were observed: the combination CNO-split/lecithin significantly improved ADG (+3.2%) and numerically improved F:G (by 0.6%) compared to soya oil. CNO-split significantly improved ADG (by 3.9%) and overall period F:G (by 2.6%) compared to soya oil. Lecithin significantly worsened F:G (+1.7%) compared to soya oil.

The only difference in excreta quality was a tendency for the CNO-split to lower free water. This is thought to be related to an improved intestinal health.

**Claims**

1.    A pumpable fat composition comprising:

- a medium chain fatty acid (MCFA)-rich composition; and
- lecithin,
in a weight ratio of 20:80 to 80:20, and wherein the MCFA-rich composition comprise 90% or more, by weight, free fatty acids (FFAs).

2.    A composition according to claim 1, wherein the MCFA-rich composition comprises, by weight:

• 0-5% C6 fatty acids;
• 1-15% C8 fatty acids;
• 1-15% C10 fatty acids; and
• 35-70% C12 fatty acids.

3.  A composition according to claim 1 or claim 2, wherein the MCFA-rich composition is selected from a split lauric oil, a split acid oil, a lauric oil fatty acid distillate (FAD) and mixtures of two or more thereof.

4.  A composition according to claim 3, wherein the lauric oil is selected from the group consisting of: coconut oil, palm kernel oil and mixtures thereof.

5.  A composition according to claim 3, wherein the acid oil is an acid lauric oil.

6.  A composition according to any one of the preceding claims, which has a solid fat content at 20°C, measured according to Method A, of less than 30% by weight.

7.  A composition according to any one of the preceding claims, which has a fluidity at 20°C, measured according to Method B, of at least 0.5 cm over 30 seconds.

8.  A composition according to any one of the preceding claims, comprising no more than 1% moisture by weight.

9.  A composition according to any one of the preceding claims, consisting essentially of the MCFA-rich composition and the lecithin.

10. A feed composition comprising the fat composition according to any one of the preceding claims, in an amount of 0.05-30% by weight in the total feed composition.

11. The fat composition of any one of claims 1 to 9 for use in inhibiting the growth of microbial agents in animals.

12. The composition of any one of claims 1 to 9 for use in enhancing feed efficiency and/or enhancing growth and/or reducing mortality in an animal.

13. Use of the fat composition according to any one of claim 1 to 9, as an energy source for animals.

14. A method of reducing the viscosity and/or increasing the pumpability of lecithin comprising mixing it with an MCFA-rich composition in a weight ratio of 20:80 to 80:20, and wherein the MCFA-rich composition comprise 90% or more, by weight, FFAs.

15. A method of reducing the viscosity and/or increasing the pumpability of an MCFA-rich composition comprising mixing said composition with lecithin in a weight ratio of 20:80 to 80:20, and wherein the MCFA-rich composition comprise 90% or more, by weight, FFAs.

**Patentansprüche**

1.  Pumpfähige Fettzusammensetzung, umfassend:

    - eine mittelkettige Fettsäure (MCFA)-reiche Zusammensetzung; und
    - Lecithin,
    in einem Gewichtsverhältnis von 20:80 bis 80:20, und wobei die MCFA-reiche Zusammensetzung 90% oder mehr, auf das Gewicht, freie Fettsäuren (FFAs) umfasst.

2.  Zusammensetzung nach Anspruch 1, wobei die MCFA-reiche Zusammensetzung, auf das Gewicht, umfasst:

    • 0-5% C6 Fettsäuren;
    • 1-15% C8 Fettsäuren;
    • 1-15% C10 Fettsäuren; und
    • 35-70% C12 Fettsäuren.

**3.** Zusammensetzung nach Anspruch 1 oder Anspruch 2, wobei die MCFA-reiche Zusammensetzung ausgewählt ist aus einem gespaltenen Laurinöl, einem gespaltenen Säureöl, einem Laurinöl-Fettsäure-Destillat (FAD) und Gemischen von zwei oder mehreren davon.

**4.** Zusammensetzung nach Anspruch 3, wobei das Laurinöl ausgewählt ist aus der Gruppe, bestehend aus: Kokosöl, Palmkernöl und Gemischen davon.

**5.** Zusammensetzung nach Anspruch 3, wobei das Säureöl ein Säure-Laurinöl ist.

**6.** Zusammensetzung nach einem der vorangehenden Ansprüche, welche einen Gehalt an festem Fett bei 20°C, gemessen gemäß Verfahren A, von weniger als 30 Gew.-% aufweist.

**7.** Zusammensetzung nach einem der vorangehenden Ansprüche, welche eine Fluidität bei 20°C, gemessen gemäß Verfahren B, von mindestens 0,5 cm über 30 Sekunden aufweist.

**8.** Zusammensetzung nach einem der vorangehenden Ansprüche, umfassend nicht mehr als 1% Feuchtigkeit auf das Gewicht.

**9.** Zusammensetzung nach einem der vorangehenden Ansprüche, bestehend im Wesentlichen aus der MCFA-reichen Zusammensetzung und dem Lecithin.

**10.** Futterzusammensetzung, umfassend die Fettzusammensetzung nach einem der vorangehenden Ansprüche, in einer Menge von 0,05-30 Gew.-% in der gesamten Futterzusammensetzung.

**11.** Fettzusammensetzung nach einem der Ansprüche 1 bis 9, zur Verwendung beim Hemmen des Wachstums von mikrobiellen Erregern in Lebewesen bzw. Tieren.

**12.** Zusammensetzung nach einem der Ansprüche 1 bis 9, zur Verwendung beim Steigern der Futtereffizienz und/oder Steigern des Wachstums und/oder Vermindern der Mortalität bei einem Lebewesen bzw. Tier.

**13.** Verwendung der Fettzusammensetzung nach einem der Ansprüche 1 bis 9, als eine Energiequelle für Lebewesen bzw. Tiere.

**14.** Verfahren zum Vermindern der Viskosität und/oder Erhöhen der Pumpfähigkeit von Lecithin, umfassend Vermischen desselben mit einer MCFA-reichen Zusammensetzung in einem Gewichtsverhältnis von 20:80 bis 80:20, und wobei die MCFA-reiche Zusammensetzung 90% oder mehr, auf das Gewicht, FFAs umfasst.

**15.** Verfahren zum Vermindern der Viskosität und/oder Erhöhen der Pumpfähigkeit einer MCFA-reichen Zusammensetzung, umfassend Mischen der Zusammensetzung mit Lecithin in einem Gewichtsverhältnis von 20:80 bis 80:20, und wobei die MCFA-reiche Zusammensetzung 90% oder mehr, auf das Gewicht, FFAs, umfasst.


**Revendications**

**1.** Composition de matière grasse pompable comprenant :

- une composition riche en acide gras à chaîne moyenne (MCFA) ; et
- de la lécithine,

dans un rapport en poids de 20:80 à 80:20, et la composition riche en MCFA comprenant 90 % ou plus, en poids, d'acides gras libres (FFA).

**2.** Composition selon la revendication 1, dans laquelle la composition riche en MCFA comprend, en poids :

• 0 à 5 % d'acides gras en C6 ;
• 1 à 15 % d'acides gras en C8 ;
• 1 à 15 % d'acides gras en C10 ; et
• 35 à 70 % d'acides gras en C12.

**3.** Composition selon la revendication 1 ou la revendication 2, dans laquelle la composition riche en MCFA est sélectionnée parmi une huile laurique fractionnée, une huile acide fractionnée, un distillat d'acide gras (FAD) d'huile laurique et des mélanges de deux ou plus de deux de ceux-ci.

**4.** Composition selon la revendication 3, dans laquelle l'huile laurique est choisie dans le groupe constitué : de l'huile de noix de coco, de l'huile de palmiste et de leurs mélanges.

**5.** Composition selon la revendication 3, dans laquelle l'huile acide est une huile laurique acide.

**6.** Composition selon l'une quelconque des revendications précédentes, qui a une teneur en matière grasse solide à 20 °C, mesurée selon une méthode A, inférieure à 30 % en poids.

**7.** Composition selon l'une quelconque des revendications précédentes, qui présente une fluidité à 20 °C, mesurée selon une méthode B, d'au moins 0,5 cm pendant 30 secondes.

**8.** Composition selon l'une quelconque des revendications précédentes, comprenant pas plus de 1 % d'humidité en poids.

**9.** Composition selon l'une quelconque des revendications précédentes, constituée essentiellement de la composition riche en MCFA et de la lécithine.

**10.** Composition d'alimentation comprenant la composition de matière grasse selon l'une quelconque des revendications précédentes, dans une quantité de 0,05 à 30 % en poids de la composition d'alimentation totale.

**11.** Composition de matière grasse selon l'une quelconque des revendications 1 à 9, pour une utilisation dans l'inhibition de la croissance d'agents microbiens chez des animaux.

**12.** Composition selon l'une quelconque des revendications 1 à 9, pour une utilisation dans l'amélioration de l'efficacité de l'alimentation et/ou l'amélioration de la croissance et/ou la réduction de la mortalité chez un animal.

**13.** Utilisation de la composition de matière grasse selon l'une quelconque des revendications 1 à 9, en tant que source d'énergie pour des animaux.

**14.** Procédé de réduction de la viscosité et/ou d'augmentation de la pompabilité de lécithine comprenant son mélange avec une composition riche en MCFA dans un rapport en poids de 20:80 à 80:20, et dans lequel la composition riche en MCFA comprend 90 % ou plus, en poids, de FFA.

**15.** Procédé de réduction de la viscosité et/ou d'augmentation de la pompabilité d'une composition riche en MCFA comprenant le mélange de ladite composition avec de la lécithine dans un rapport en poids de 20:80 à 80:20, et dans lequel la composition riche en MCFA comprend 90 % ou plus, en poids, de FFA.